# EUROPÄISCHE PATENTSCHRIFT

(11) **EP 1 138 964 B1**
(45) Veröffentlichungstag und Bekanntmachung des Hinweises auf die Patenterteilung: **03.08.2005**
(21) Anmeldenummer: 00128772.1
(22) Anmeldetag: 30.12.2000
(51) Int. Cl.: F16C 13/00

(54) **Rolle, insbesondere Kunststoffrolle**
Roll,especially plastic roll
Rouleau,en particulier rouleau en plastique

(30) Priorität: 31.03.2000 DE 20006025 U
(43) Veröffentlichungstag der Anmeldung: 04.10.2001
(73) Patentinhaber: Fritz Schäfer Gesellschaft mit beschränkter Haftung, D-57290 Neunkirchen (DE)
(72) Erfinder: Schäfer, Gerhard, 57290 Neunkirchen (DE)
(74) Vertreter: Valentin, Ekkehard, Dipl.-Ing.

(56) Entgegenhaltungen:
- EP-A- 0 738 674
- WO-A-98/06649
- US-A- 5 630 769

## Beschreibung

Die Erfindung betrifft eine Rolle, insbesondere aus Kunststoff, die innere, verzweigte Versteifungsrippen zwischen der Rollenachse und dem Rollenlaufmantel aufweist.

Derartige Rollen bzw. aus diesen gebildete Rollenleisten oder Rollenbahnleisten kommen üblicherweise in Durchlaufregalen für mit Waren beladenen Behältern, z.B. Lager- und/oder Transportkästen oder Kartons, zum Einsatz. Das Regal besitzt üblich in mehreren Etagen übereinander sowie in jeder Etage zu mehreren nebeneinander angeordnete, geneigte Laufbahnen für die Behälter. Jede Laufbahn besteht aus Rollenbahnleisten, die im Abstand und in einer Reihe hintereinander frei drehbare Röllchen bzw. Rollen besitzen, die meist als Zylinderrolle oder als Spurkranzrolle ausgebildet sind und üblich in einem meist verzinkten Stahlblechprofil lagern. Die Rollen, aus Stahl, vorzugsweise aus Kunststoff, sind den jeweiligen Belastungsfällen angepaßt und dienen als Stütz- und Führungselemente für Behälter bzw. Kästen.

Um den auftretenden Belastungsfällen entsprechen zu können, sind Rollen in mannigfacher Ausführung bekannt, insbesondere aus Vollkunststoff gefertigte Rollen, die eine kraftabsorbierende versteifende Verbindung zwischen der Achse und dem Laufmantel aufweisen. Hierzu ist es bekannt, im Rollenmantelinnern gerade verlaufende oder zusätzlich verzweigte Versteifungsrippen aus Kunststoff anzuordnen, mit dem Ziel, eine Deformation des Laufmantels der Rolle, insbesondere bei lang anhaltender Belastung, zu vermeiden und somit die Rundlaufeigenschaften der Rolle zu gewährleisten.

Ein Nachteil dieser versteifenden Ausführungsart besteht in der starken Druckgefährdung der Kunststoffrolle bei plötzlicher Schlagbelastung. Dies zeigt sich insbesondere bei einstückig hergestellten Rollen mit Kunststoffachsen, wobei der Schlag auf den Laufmantel durch die Innenverrippung zur Achse geleitet wird und es so zu einem Bruch der Achse kommen kann.

Im Stand der Technik wird diesem Achsbruch entgegengewirkt, indem bei den bekannten Rollen eine Reduzierung der Verbindungsrippen bzw. der Anbindungsfläche der Rippen an die Achse und/oder den Laufmantel erfolgt. Durch die Reduzierung wird zwar einem Bruch der Achse entgegengewirkt, es tritt aber wieder verstärkt eine Deformation des Laufmantels, einhergehend mit wesentlich verschlechterten Rundlaufeigenschaften der Rolle auf.

Der Erfindung liegt die Aufgabe zugrunde, eine Rolle der eingangs genannten Art zu schaffen, die diese Nachteile vermeidet und hohen Belastungen standhält.

Diese Aufgabe wird erfindungsgemäß dadurch gelöst, daß die verzweigte Innenverrippung mit zusätzlichen Gelenken versehen ist, die zwischen einer an den Laufmantel angebundenen Anbindungsrippe und einer von einer Zentralrippe jeweils nach rechts und links verlaufenden Gabelrippe ausgebildet sind. Bei der Erfindung ist somit vorgesehen, an dem freien Ende der mit der Rollenachse verbundenen Zentralrippe jeweils eine nach rechts und eine nach links abzweigende Gabelrippe anzuordnen, die dann noch über jeweils eine Anbindungsrippe mit dem Laufmantel verbunden ist. Hierdurch ergibt sich über jeder Zentralrippe eine im Querschnitt im wesentlichen gespreizte U-förmige Versteifungsrippenanordnung, die im Übergangsbereich der Gabelrippen zu den Anbindungsrippen die Gelenke aufweist. Somit entsteht eine einzelne Gelenkrippeneinheit, von denen mehrere umfangsverteilt im Inneren der Kunststoffrolle angeordnet sind.

Durch die gelenkige Verbindung zwischen den Anbindungsrippen und den Gabelrippen wird in diesem Bereich praktisch eine Federung erzielt, die hohe Krafteinleitungen, aufgrund starker Belastungen des Laufmantels, absorbiert. Durch die Gelenke ergibt sich eine Federung, die einerseits einer Deformation des Laufmantels entgegenwirkt und andererseits Kräfte, beispielsweise hervorgerufen durch Schläge auf den Laufmantel, aufnimmt und nicht zur Rollenachse weiterleitet.

Eine bevorzugte Ausgestaltung der Erfindung sieht vor, daß die Anbindungsrippe zu einer an den Laufmantel angelegten Tangente unter einem rechten Winkel verläuft. Dadurch wird eine erhöhte Kraftaufnahme der Anbindungsrippe bzw. - rippen bei Belastungen des Laufmantels erreicht. Weiterhin ermöglicht die rechtwinklige Anordnung an den Laufmantel eine gleichmäßige Verteilung der Schmelze beim Herstellungsprozeß, der vorzugsweise durch Spritzgießen erfolgt, wodurch der Laufmantel eine gänzlich kreisförmige Ausbildung erfährt, was insbesondere die Rundlaufeigenschaften verbessert und somit zu einem ruhigeren Lauf der zu fördernden Behälter führt.

Eine weitere Ausgestaltung der Erfindung sieht vor, daß jeweils zwei zueinander diametral angeordnete Anbindungsrippen eine gedachte Linie durch den Rollenmittelpunkt beschreiben. Damit wird erreicht, daß eine vom Laufmantel übertragene Krafteinleitung über die Anbindungsrippen, die Gabelrippen und die Zentralrippe zentrisch auf den Rollenmittelpunkt erfolgt. Dies hat den Vorteil, daß die Rollenachse gleichmäßig belastet und somit ein Achsbruch, insbesondere bei schweren Schlägen auf den Laufmantel, verhindert wird.

Nach einer weiteren Ausgestaltung der Erfindung wird vorgeschlagen, daß die Winkelabstände von Anbindungsrippe zu Anbindungsrippe in etwa gleich sind. Darunter ist sowohl der Winkelabstand zwischen zwei Anbindungsrippen einer Gelenkrippeneinheit als auch der Winkelabstand zwischen zwei in Umfangsrichtung beabstandeten Gelenkrippeneinheiten zu verstehen. Aufgrund der gleichen Winkelabstände zwischen den Anbindungsrippen wird von diesen eine an jedem Punkt der Lauffläche auftretende Kraft proportional aufgenommen und über die nachfolgend angebundenen Rippen weitergeleitet bzw. von den Gelenken im Verbindungsbereich der Anbindungsrippen zu den Gabelrippen absorbiert. Einerseits werden dadurch die Rundlaufeigenschaften des Laufmantels der Rolle verbessert und andererseits die gleichmäßige Verteilung der Schmelze beim Spritzgießen unterstützt.

Gemäß einer weiteren Ausgestaltung der Erfindung ist vorgesehen, daß Anbindungsrippe und Gabelrippe jeweils einen Innenwinkel α > 90° einschließen. Der Innenwinkel definiert den eingeschlossenen Bereich zwischen der Anbindungsrippe und der Gabelrippe. Somit werden die Anbindungsrippen ausgehend von den jeweiligen Gelenken bis zu ihrer Verbindung mit dem Laufmantel nach außen gespreizt und stützen eine größere Fläche des Laufmantels, und zwar jeweils innerhalb einer Gelenkrippeneinheit, ab. Hierdurch wird die federnde Ausrichtung der Anbindungsrippen bei einer Belastung auf die Fläche beeinflußt und die Kraftabsorption in den Gelenken wesentlich erhöht.

Des weiteren sieht die Erfindung vor, daß Anbindungsrippe und Gabelrippe unter einem Außenwinkel β > 180° angeordnet sind. In der Ausgewogenheit mit dem damit unmittelbar zusammenhängenden Innenwinkel läßt sich eine Optimierung bei der Festlegung der abgestützten und nicht abgestützten Flächen erreichen. Der Innenwinkel α > 90° in Kombination mit dem Außenwinkel β > 180° ermöglicht folglich zum einen eine stark verbesserte Kraftabsorption bei Belastungen im gesamten Laufflächenbereich der Rolle und zum andern wesentlich verbesserte Rundlaufeigenschaften des Rollen-Laufmantels, da Deformationen bewirkende Belastungen des Laufmantels großflächig ausgefedert werden.

Weiterhin ist es bei der erfindungsgemäßen Rolle möglich, daß sich die Versteifungsrippenanordnung bzw. die Gelenkrippeneinheiten durchgängig von einer axialen Stirnseite zur anderen axialen Stirnseite der Rolle erstrecken, wodurch eine bei herkömmlichen Rollen bekannte, mittlere Versteifungsfläche, welche den Laufkranz über seinen gesamten Umfang mit der Rollenachse verbindet, entfällt. Somit wird eine weitergehende, stoßabsorbierende Federwirkung erreicht, da keine mittlere Versteifungsfläche bzw. Mittentrennwand mehr benötigt wird.

Eine weitere Ausgestaltung der Erfindung ist gekennzeichnet durch eine aus jeweils mehreren Gelenkrippeneinheiten bestehende Versteifungsrippenanordnung an jedem Laufmantelende, die gegeneinander versetzt sind. Die einzelnen Gelenkrippeneinheiten werden bei dieser Ausführung von der Mitte der Rolle ausgehend und sich jeweils zu den Laufmantelenden - worunter jeweils die axiale, offene Stirnseite der Rolle zu verstehen ist - hin erstreckend sowie vorzugsweise 45° gegeneinander verdreht angeordnet hergestellt. Somit ergibt sich, daß den an einem Laufmantelende bis zur Rollenmitte angeordneten Gelenkrippeneinheiten und den von diesen abgestützten Laufmantelbereichen am dem anderen, entgegengesetzten, wiederum von der Rollenmitte ausgehenden Laufmantelende ein gelenkrippenfreier Abstützbereich gegenüberliegt. Zum einen wird dadurch die Federwirkung der Rippen erhöht und somit auch die Kraftabsorption bei verschiedensten Belastungsfällen verstärkt. Zum anderen wird durch die gegeneinander versetzte Rippenanordnung eine größtmögliche Steifigkeit der gesamten Verrippung erzielt und damit einhergehend eine noch belastungsfähigere Kunststoffrolle geschaffen.

Weitere Einzelheiten und Vorteile der Erfindung ergeben sich aus den Ansprüchen und der nachfolgenden Beschreibung von in den Zeichnungen dargestellten Ausführungsbeispielen der Erfindung. Es zeigen:
- Fig. 1: die Gesamtansicht einer Rolle;
- Fig. 2: die Rolle gemäß Fig. 1 mit im Inneren angeordneten Verrippungen, von der linken Stirnseite her gesehen; und
- Fig. 3: die Rolle gemäß Fig. 1 von der rechten Stirnseite her gesehen.

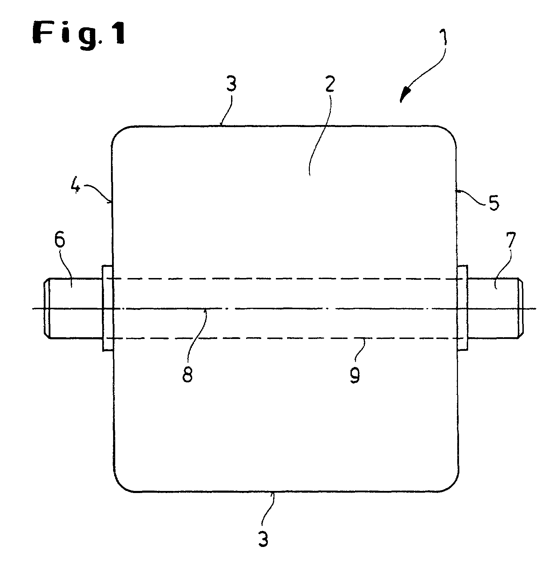

Eine in Fig. 1 gezeigte Rolle 1 gehört beispielsweise zu einer hier nicht dargestellten Rollenbahnleiste, die im Abstand und in einer Reihe hintereinander angeordnete, frei drehbare Rollen besitzt.

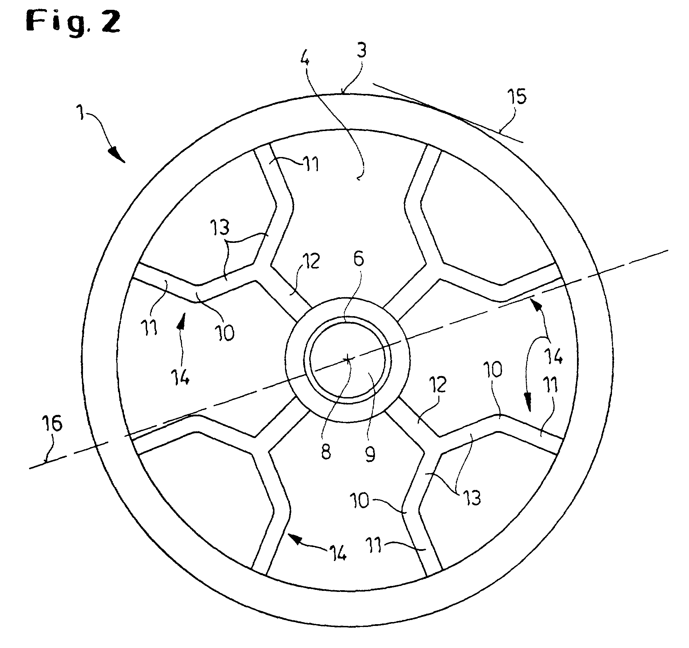

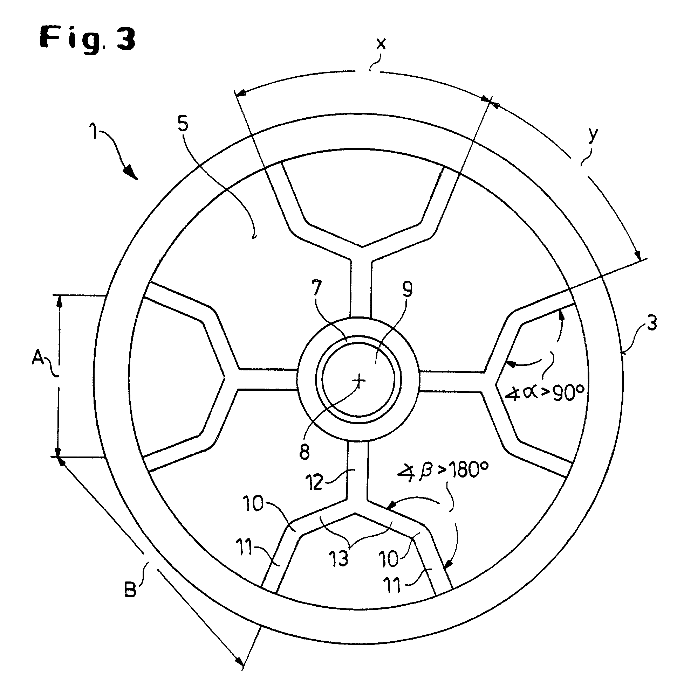

Die Rolle 1, vorzugsweise aus Kunststoff durch Spritzgießen hergestellt, weist einen Rollenkörper 2 auf, der mit einem Laufmantel 3 ausgebildet ist. Der Rollenkörper 2 weist sowohl an seinem linken Laufmantelende 4 als auch an seinem rechten Laufmantelende 5 vorkragende Achszapfen 6, 7 einer den Rollenmittelpunkt 8 bildenden Rollenachse 9 auf (vgl. hierzu Fig. 2 und 3).

Gemäß den Fig. 2 und 3 ist die Rolle 1 mit einer verzweigten Innenverrippung zwischen der Rollenachse 9 und dem Laufmantel 3 versehen. Die Verrippung ist mit Gelenken 10 ausgeführt, die jeweils zwischen einer an den Laufmantel 3 angebundenen Anbindungsrippe 11 und einer von einer Zentralrippe 12 ausgehenden Gabelrippe 13 ausgebildet sind. Es entsteht somit eine im wesentlichen U-förmig gespreizte Gelenkrippeneinheit 14, von denen im Ausführungsbeispiel vier Einheiten 14 umfangsverteilt im Inneren der Rolle 1 angeordnet sind. Durch die Gelenke 10 wird im Übergangsbereich von der Gabelrippe 13 zu der Anbindungsrippe 11 eine Federung erzielt, die hohe Krafteinleitungen aufgrund starker Belastungen des Laufmantels 3 absorbiert.

Die Anbindungsrippen 11 verlaufen in etwa unter einem rechten Winkel zu einer an den Laufmantel 3 angelegten Tangente 15, wodurch eine erhöhte Kraftaufnahme der Anbindungsrippen 11 bzw. der Gelenkrippeneinheiten 14 bei Belastungen des Laufmantels 3 erreicht wird.

Die Anbindungsrippen 11 sind dergestalt am Laufmantel 3 angeordnet, daß jeweils zwei sich diametral gegenüberliegende Rippen 11 eine gedachte Linie 16 durch den Rollenmittelpunkt 8 beschreiben. Dadurch erfolgt eine vom Laufmantel 3 übertragene Krafteinleitung zentrisch auf den Rollenmittelpunkt 8. Des weiteren sind die Anbindungsrippen 11 unter gleichen Winkelabständen x, y am Laufmantel 3 angeordnet. Aufgrund der gleichen Winkelabstände x, y zwischen den Anbindungsrippen 11 wird von diesen eine an jedem Punkt der Lauffläche 3 auftretende Kraft proportional aufgenommen und über die nachfolgenden Rippen weitergeleitet bzw. von den Gelenken 10 absorbiert.

Die Anbindungsrippen 11 und die Gabelrippen 13 sind über die Gelenke 10 unter einem Innenwinkel α > 90° miteinander verbunden. Dadurch sind die Anbindungsrippen 11 weiter nach außen gespreizt und stützen somit eine größere Fläche A des Laufmantels 3 ab. Der durch die Anbindungsrippen 11 und die Gabelrippen 13 der Gelenke 10 definierte Außenwinkel β > 180° beeinflußt die zwischen den Gelenkrippeneinheiten 14 liegende freie, nicht abgestützte Fläche B des Laufmantels 3 und damit die gewünschte federnde Ausrichtung der Anbindungsrippen 11 und der Gelenkrippen 13 bei Belastung.

Wie aus der Zusammenschau der Fig. 2 und 3 ersichtlich, sind die Gelenkrippeneinheiten 14 des rechten Laufmantelendes 5 gegenüber den Gelenkrippeneinheiten 14 des linken Laufmantelendes 4 um 45° gegeneinander verdreht angeordnet. Hierdurch ergibt sich, daß einer an dem Laufmantelende 4 angeordneten Gelenkrippeneinheit 14, die Fläche A des Laufmantels eingrenzend, am entgegengesetzten Laufmantelende 5 jeweils ein gelenkrippenfreier Bereich, die Fläche B des Laufmantels umfassend, gegenüberliegt. Durch die gegeneinander versetzte, sich jeweils über die hälftige Rollenlänge erstreckende Rippenanordnung wird eine größtmögliche Steifigkeit der gesamten Verrippung erzielt und damit einhergehend eine belastungsfähigere Rolle 1 geschaffen.

## Patentansprüche

1. Rolle (1), insbesondere Kunststoffrolle, die innere, verzweigte Versteifungsrippen (11-13) zwischen der Rollenachse (8) und dem Rollenlaufmantel (3) aufweist,
**dadurch gekennzeichnet,**
**daß** die verzweigte Verrippung mit zusätzlichen Gelenken (10) versehen ist, die zwischen einer an den Laufmantel (3) angebundenen Anbindungsrippe (11) und einer von einer Zentralrippe (12) jeweils nach rechts und nach links verlaufenden Gabelrippe (13) ausgebildet sind.

2. Rolle nach Anspruch 1,
**dadurch gekennzeichnet,**
**daß** die Anbindungsrippe (11) zu einer an den Laufmantel (3) angelegten Tangente (15) unter einem rechten Winkel verläuft.

3. Rolle nach Anspruch 1 oder 2,
**dadurch gekennzeichnet,**
**daß** jeweils zwei zueinander diametral angeordnete Anbindungsrippen (11) eine gedachte Linie (16) durch den Rollenmittelpunkt (8) beschreiben.

4. Rolle nach einem der Ansprüche 1 bis 3,
**dadurch gekennzeichnet,**
**daß** die Winkelabstände (x, y) von Anbindungsrippe (11) zu Anbindungsrippe (11) in etwa gleich sind.

5. Rolle nach einem der Ansprüche 1 bis 4,
**dadurch gekennzeichnet,**
**daß** Anbindungsrippe (11) und Gabelrippe (13) jeweils einen Innenwinkel (α) > 90° einschließen.

6. Rolle nach einem der Ansprüche 1 bis 5,
**dadurch gekennzeichnet,**
**daß** Anbindungsrippe (11) und Gabelrippe (13) unter einem Außenwinkel (β) > 180° angeordnet sind.

7. Rolle nach einem der Ansprüche 1 bis 6,
**gekennzeichnet durch**
eine aus jeweils mehreren Gelenkrippeneinheiten (14) bestehende Versteifungsrippenanordnung an jedem Laufmantelende (4, 5), die gegeneinander versetzt sind.

8. Rolle nach Anspruch 7,
**dadurch gekennzeichnet,**
**daß** benachbarte Gelenkrippeneinheiten (14) im gleichen Winkelabstand zueinander angeordnet sind.

## Claims

1. A roller (1), in particular a plastic roller, which has internal, branched stiffening ribs (11-13) between the roller axis (8) and the roller running surface (3),
**characterised in that**
the branched ribbing is provided with additional links (10), which are formed between a connecting rib (11) attached at the running surface (3) and a fork rib (13) running respectively to the right and left from a central rib (12).

2. The roller according to claim 1,
**characterised in that**
the connecting rib (11) runs at right angles to a tangent (15) laid at the running surface (3).

3. The roller according to claim 1 or 2,
**characterised in that**
two connecting ribs (11) arranged diametrically opposed to one another in each case describe an imaginary line (16) through the roller centre point (8).

4. The roller according to any one of claims 1 to 3,
**characterised in that**
angular distances (x, y) from connecting rib (11) to connecting rib (11) are approximately equal.

5. The roller according to any one of claims 1 to 4,
**characterised in that**
connecting rib (11) and fork rib (13) enclose in each case an internal angle (α) > 90°.

6. The roller according to any one of claims 1 to 5,
**characterised in that**
connecting rib (11) and fork rib (13) are arranged with an external angle (β) > 180°.

7. The roller according to any one of claims 1 to 6,
**characterised by**
a stiffening rib arrangement comprising in each case several link-rib units (14) at each end (4, 5) of the running surface, said link-rib units being offset with respect to one another.

8. The roller according to claim 7,
**characterised in that**
neighbouring link-rib units (14) are arranged at the same angular distance from one another.

## Revendications

1. Galet (1) en particulier galet en matière synthétique, qui présente des nervures de raidissement internes et ramifiées (11-13) entre l'axe de galet (8) et l'enveloppe de roulement de galet (3),
**caractérisé en ce que**
le nervurage ramifié est muni d'articulations supplémentaires (10) qui sont ménagées entre une nervure de liaison (11) reliée à l'enveloppe de roulement (3) et une nervure en fourche (13) s'étendant depuis une nervure centrale (12)respectivement vers la droite et vers la gauche.

2. Galet selon la revendication 1,
**caractérisé en ce que**
la nervure de liaison (11) s'étend en formant un angle droit par rapport à une tangente (15) appliquée contre l'enveloppe de roulement (3).

3. Galet selon la revendication 1 ou 2,
**caractérisé en ce que**
respectivement deux nervures de liaison (11) disposées diamétralement l'une à l'autre décrivent une ligne imaginaire (16) passant par le point central de galet (8).

4. Galet selon l'une des revendications 1 à 3,
**caractérisé en ce que**
les distances angulaires (x, y) entre la nervure de liaison (11) et la nervure de liaison (11) sont à peu près égales.

5. Galet selon l'une des revendications 1 à 4,
**caractérisé en ce que**
la nervure de liaison (11) et la nervure en fourche (13) forment respectivement un angle intérieur (α) > 90°.

6. Galet selon l'une des revendications 1 à 5,
**caractérisé en ce que**
la nervure de liaison (11) et la nervure en fourche (13) sont disposées sous un angle externe (β) > 180°.

7. Galet selon l'une des revendications 1 à 6,
**caractérisé par**
une disposition de nervures de raidissement se composant respectivement de plusieurs unités de nervures articulées (14) sur chaque extrémité d'enveloppe de roulement (4, 5) qui sont décalées entre elles.

8. Galet selon la revendication 7,
**caractérisé en ce que**
des unités de nervures articulées voisines (14) sont disposées à distance angulaire égale les unes des autres
